# EUROPÄISCHE PATENTSCHRIFT

(11) **EP 3 355 680 B1**
(45) Veröffentlichungstag und Bekanntmachung des Hinweises auf die Patenterteilung: **03.04.2019**
(21) Anmeldenummer: 15715968.2
(22) Anmeldetag: 24.02.2015
(51) Int. Cl.: A01D 43/08

(54) **VERFAHREN ZUR MESSUNG DES ERNTEGUTMASSESTROMS AM FELDHÄCKSLER**
METHOD FOR MEASURING THE CROP MASS FLOW ON A FORAGE HARVESTER
PROCÉDÉ DE MESURE DU FLUX MASSIQUE DE PRODUIT DE RÉCOLTE SUR UNE RÉCOLTEUSE-HACHEUSE

(43) Veröffentlichungstag der Anmeldung: 08.08.2018
(73) Patentinhaber: MSO Messtechnik und Ortung GmbH, 53902 Bad Münstereifel-Schönau (DE)
(72) Erfinder: HIEN, Peter, 53902 Bad Münstereifel (DE)
(74) Vertreter: Limbeck, Achim
(86) Internationale Anmeldenummer: PCT/DE2015/100074
(87) Internationale Veröffentlichungsnummer: WO 2016/134684

(56) Entgegenhaltungen:
- EP-A1- 0 887 008
- EP-A2- 2 397 027
- US-B1- 6 421 990

## Beschreibung

### Technisches Gebiet

Die vorliegende Erfindung betrifft ein Verfahren zur Messung des Erntegutmassestroms am Feldhäcksler gemäß dem Oberbegriff des vorliegenden Hauptanspruchs 1.

### Stand der Technik

Ein Feldhäcksler kombiniert die Funktionen Aufnahme, Fördern, Zerkleinern und Übergabe auf Transportfahrzeuge von Erntegut wie Mais, Gras, Getreideganzpflanzen und Plantagenholz. Dieser ist auf einem Rahmen aufgebaut, der von einem Fahrwerk getragen wird. Der selbstfahrende Feldhäcksler ist durch einen eigenen Motor hoher Leistung angetrieben. Die Bedienung des Feldhäckslers erfolgt von einer Fahrerkabine aus. Mittels einer Erntegutaufnahmevorrichtung wird das Erntegut aufgenommen und über Einzugsaggregate zu Aggregaten zur Zerkleinerung und Förderung zugeführt, wobei es über eine Beschleunigertrommel mit hoher Drehfrequenz beschleunigt und mit hoher Geschwindigkeit über einen Auswurfturm in einen Auswurfkrümmer gefördert wird. Die obere Innenwand des Auswurfkrümmers wird hierbei von dem Gut angeströmt. Hierbei erfolgt eine Ablenkung des Gutstroms entsprechend der parabolischen Kurvatur der oberen Innenwand des Auswurfkrümmers. Das Gut verlässt den Feldhäcksler über den Auswurfkrümmer und eine an dessen Ende angelenkte kippbare Leitplatte zu einem Transportfahrzeug.

Zur Lenkung des Gutstroms auf das Transportfahrzeug ist der Auswurfkrümmer mittels eines (doppeltwirkenden) Hydraulikhubzylinders über eine Drehachse am Auswurfturm neigbar. Gleichzeitig ist der Auswurfkrümmer über einen Hydromotor und ein Zahnrad um die vertikale Achse drehbar. Im Normalbetrieb des Feldhäckslers wird der Auswurfkrümmer auf eine Arbeitshöhe angehoben und der Gutstrom auf den Anhänger eines nebenher fahrenden Fahrzeugs geworfen.

Die Messbarkeit des Erntemassegutstromes ist die Voraussetzung für die Ertragserfassung, Precision Farming, massenbezogene Abrechnung bei Erntedienstleistung, Steuerung und Regelung von Maschinenparametern wie Einhalten eines kraftstoffsparenden Motorbetriebspunktes sowie durchsatzabhängige Regelung der Fahrgeschwindigkeit und durchsatzproportionale Zugabe von Zuschlagstoffen, z.B. Silierhilfs- oder Konservierungsmittel.

Zur Bestimmung des Erntegutmassestromes an Feldhäckslern ist aus Patentschriften und Literatur bereits eine Vielzahl von Lösungsansätzen und Lösungsvarianten bekannt. Es werden mittels unterschiedlicher physikalischer Prinzipien unterschiedliche Größen erfasst, die zum Durchsatz des Erntegutes ins Verhältnis gesetzt werden.

Ein Lösungsansatz zur Bestimmung des Erntegutmassestromes beruht auf der Erfassung von durchsatzproportionalen Drehmomenten von Förder- und/oder Zerkleinerungsaggregaten, z.B. durch Hydraulikdruckmessung am hydraulischen Antrieb von Einzugsaggregaten (DE 10154874 A1) oder Hydraulikdruckmessung am Antrieb der Einzugsorgane (WO 03/039239A1).

Zur Erfassung des Erntegutmassestromes wird ebenfalls die Messung des durchsatzproportionalen Abstandes zwischen zwei im Förderweg des Erntegutstromes angeordneten Vorpresswalzen kombiniert mit einer Kraftmessung im Bereich der maximalen Grenzlage sowie einer Lichtschranke zur Erfassung eines geringen Durchsatzes (DE 19903471 C1).

Der Erntegutmassestrom wird ferner aus der Erfassung der Kraftwirkung bei Aufprall und Umlenkung des Erntegutstromes auf eine im Auswurfkrümmer angeordnete Prallplatte (US 1006/0046802 A1, EP0887008 A1, US105736652) oder an einer Leitplatte am Ende des Auswurfkrümmers (Schmittmann, Osman, Kromer "Durchsatzmessung bei Feldhäckslern", Landtechnik 4/2000 S. 286-287) abgeleitet.

Weitere Arbeiten schlagen eine Volumenstrommessung des Erntegutes, z.B. durch Vermessung des Gutstromquerschnitts im Auswurfkrümmer mittels Laserscanner und der Gutstromgeschwindigkeit mittels Dopplerradar (Schmittmann, Osman, Kromer "Durchsatzmessung bei Feldhäckslern", Landtechnik 4/2000 S. 286-287) vor.

Zur Messung der Erntegutmenge am Feldhäcksler wird die massenstromproportionale Auslenkung von Förderaggregaten wie Presswalzen (DE 19524752 A1) genutzt.

Im Fall der Ernte von in einem Schwad abgelegten Gras wird überdies aus den Abmessungen des Grasschwads vor dem Aufnahmeaggregat beim Grashäckseln der Durchsatz abgeleitet.

Aus der Patentliteratur sind des Weiteren Lösungsansätze zur Ableitung des Erntegutmassestromes aus vibroakustischen Maschinenparameter bekannt (SU 1396992, DE 10211800 A1, (DE 102006015152 A1).

Vorgeschlagen wurde auch die Ermittlung des Erntegutmassestromes aus der Auslenkung einer Blechverkleidung eines Häckselaggregates mittels Laserinterferometer (EP 1652421 A1).

Weiterhin ist eine Lösung zur Ableitung des Erntegutmassestromes mittels der Luftdruckdifferenz zwischen zwei Messebenen im Auswurfschacht (DE 4041995 A1) mit einer Messebene nahe an der Häckseltrommel und einer am Ende des sich konisch verengenden Schachtes bekannt.

Kapazitive Messverfahren ermitteln den Erntegutmassestrom mittels eines Messkondensators (DE4105857 C2).

Die Mikrowellendämpfung, Phasenverschiebung sowie die Messung bei mehreren Frequenzen sollen in DE 19648126 A1 zur Messung von Parametern wie "Gutdurchsatz, Feuchtigkeit, Dichte, Masse etc." Anwendung finden.

Radiometrische Verfahren, z.B. Dämpfung durch den Gutstrom transmittierter Gamma-, Beta- oder Röntgenstrahlung wurden in der WO 001985000087 A1 vorgeschlagen, werden jedoch in der aktuellen Praxis nicht genutzt.

Eine weitere aus der Literatur bekannt gewordene Möglichkeit ist die Verwiegung des das Erntegut aufnehmenden Behälters auf einem Transportfahrzeug (ASAE Paper 021165; Won Suk Lee, Thomas F. Burks, John K. Schueller : Silage Yield Monitoring System).

In der Praxis finden hauptsächlich Systeme mit Abstandsmessung an Förderorganen und die Messung der Gutstromgeschwindigkeit Anwendung. Die Systeme machen eine häufige Kalibrierung aufgrund der veränderlichen Bedingungen erforderlich. Die Funktion ist bei niedrigen und hohen Erntegutmasseströmen eingeschränkt. Bei niedrigen Erntegutmasseströmen erfolgt keine oder nur eine geringe Auslenkung der Förderorgane. Bei hohen Masseströmen werden Endstellungen der Förderorgane erreicht, die die Messung verhindern.

Die oben genannten praxisüblichen Systeme setzen einen gleichmäßig über die Breite der Förderorgane verteilten Erntegutmassestrom voraus, was häufig nicht gegeben ist.

Die Eigenschaften des Erntegutes (Abmessungen der zerkleinerten Teile, deren Dichte, Elastizität und Kompressibilität, Trockenmassegehalt) beeinflussen die erreichbare Messgenauigkeit.

Der bisherige Stand der Technik zur Erntegutmasseerfassung an Feldhäckslern erfordert darüber hinaus sehr häufiges Kalibrieren durch Gegenwiegen und weist Defizite auf bei niedrigen und hohen Erntegutmasseströmen und erfordert häufig eine Vielzahl von Sensoren. Ferner weisen bekannte Systeme bei radiometrischen Verfahren geringe gesellschaftliche Akzeptanz auf und erfordern bei fahrzeuggebundenen Wiegesystemen eine aufwendige Ausstattung.

Der bisherige Stand der Technik weist meist indirekte Lösungsansätze zur Ableitung des Erntegutmassestromes auf.

Aus der EP-A1-0- 887 008 ist ein Verfahren zur Messung des Erntegutstroms an einem Feldhäcksler bekannt, bei dem mittels einer Erntegutaufnahmevorrichtung das Erntegut aufgenommen und über Einzugsaggregate zu Aggregaten zur Zerkleierung und Förderung zugeführt wird, wobei das Erntegut über einen an einem Auswurfturm vorgesehenen Auswurfkrümmer zu einem Transportfahrzeug gefördert wird und zur Lenkung des Erntegutstroms auf das Transportfahrzeug eine Einrichtung zur Einstellung des Neigungswinkels des Auswurfkrümmers vorgesehen ist. Bei diesem Verfahren wird der Erntegutstroms aus der Erfassung der Kraftwirkung bei Aufprall und Umlenkung des Erntegutstroms auf einen im Auswurfkrümmer angeordeten Sensor abgeleitet.

Aus der EP-A2-2 397 027 ist ferner eine Vorrichtung zur Durchführung dieses Verfahrens bekannt, wobei Sensoren zur Messung der der Masse des Erntegutstroms proportionalen Kraft vorgesehen sind, die an der Einrichtung zur Einstellung des Neigungswinkels des Auswurfkrümmers wirkt.

### Darstellung der Erfindung

Der vorliegenden Erfindung liegt die Aufgabe zu Grunde, ein verbessertes Verfahren zur Messung des Erntegutmassestroms am Feldhäcksler zu schaffen, das bei einfachem robustem Aufbau und unter Verwendung weniger Sensoren eine hohe Genauigkeit der Messung der Erntegutmassestroms über den gesamten Durchsatzbereich sicherstellt. Die dem Verfahren zugrunde liegende Vorrichtung soll an vorhandenen Maschinen einfach nachrüstbar sein und die besonderen Bedingungen des mobilen Einsatzes im Fahrbetrieb über rauen Untergrund wie Umweltbedingungen, Stöße sowie nieder- bis hochfrequente Schwingungen bzw. Vibration beachten und die daraus erwachsenden Anforderungen erfüllen.

Erfindungsgemäß wird die voranstehende Aufgabe gemäß dem Oberbegriff des Anspruchs 1 in Verbindung mit den kennzeichnenden Merkmalen gelöst. Vorteilhafte Ausgestaltungen und Weiterbildungen des erfindungsgemäßen Verfahrens sind in den abhängigen Unteransprüchen angegeben.

Erfindungsgemäß ist ein Verfahren der eingangs genannten Art gekennzeichnet durch die Ermittlung der der Masse des Erntegutmassestroms proportionalen Kraft, die an der Einrichtung zur Einstellung des Neigungswinkels des Auswurfkrümmers wirkt. Die Vorrichtung zur Durchführung dieses Verfahrens ist gekennzeichnet durch entsprechende Sensoren zur Messung dieser Kraft.

### Kurzbeschreibung der Zeichnungen

Weitere Ziele, Merkmale, Vorteile und Anwendungsmöglichkeiten des erfindungsgemäßen Verfahrens ergeben sich aus der nachfolgenden Beschreibung eines Ausführungsbeispiels anhand der Zeichnungen.

In den Zeichnungen zeigen
Fig.1 einen Feldhäcksler;
Fig.2 den Ausschnitt eines Auswurfkrümmers;
Fig.3 einen exemplarischen Messschrieb der Druckmesswerte.

### Ausführung der Erfindung

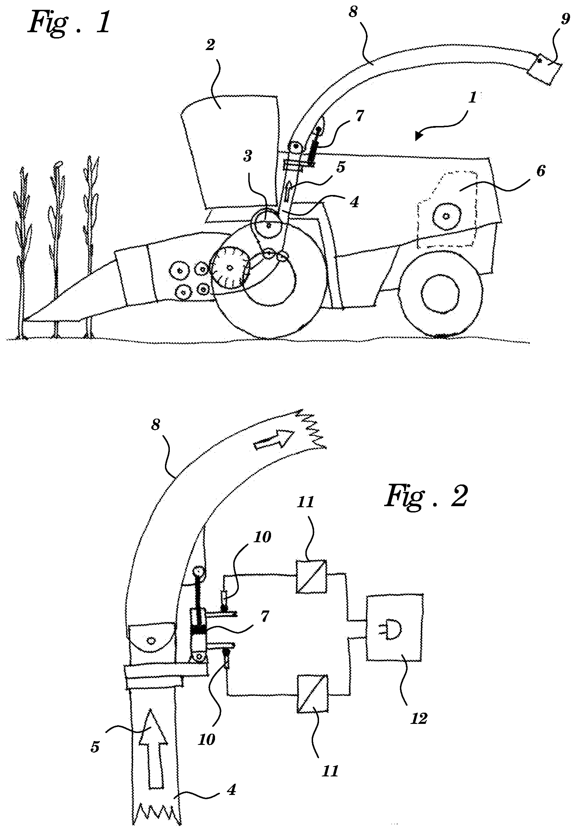

Wie aus Fig.1 ersichtlich, erfolgt die Ermittlung der der Masse des Erntegutmassestroms 5 proportionalen Kraft vorzugsweise durch ständige Messung der Drücke der Hydraulikflüssigkeit am Hubzylinder 7 mittels bekannter Drucksensoren 10, die den Druck der Hydraulikflüssigkeit in der Rückverfolgung der jeweiligen Hydraulikleitung von Kolbenboden- und Kolbenoberseite (druck- und gegendruckseitig) erfassen.

Die beiderseitige Erfassung des Drucks der Hydraulikflüssigkeitssäule ist besonders vorteilhaft, da sie messtechnisch einfach und leicht nachrüstbar an vorhandenen Maschinen ist. Weitere besondere Vorteile der beiderseitigen Druckmessung ist die inhärente Kompensation von Stößen und Vibration sowie der temperaturbedingten veränderlichen Viskosität der Hydraulikflüssigkeit.

Der Erntegutmassenstrom 5 wird mittels der Beschleunigertrommel 3 beschleunigt, durch einen Auswurfturm 4 geleitet und im weiteren Verlauf der Förderstrecke durch den Auswurfkrümmer 8 auf ein Transportfahrzeug geworfen. Das Erntegut mit der Masse m wird mit hoher Geschwindigkeit v in den Auswurfkrümmer 8 gefördert. Der Auswurfkrümmer 8 wird in eine Arbeitsposition zur Übergabe des Erntegutmassenstroms 5 auf ein Transportfahrzeug gehoben und geschwenkt.

Hierbei strömt der Erntegutmassenstrom 5 die parabolisch gebogene Innenwand des Auswurfkrümmers 8 an und wird dabei entlang dieser gebogenen Fläche abgelenkt und geführt. Der Strömungsimpuls *I*ₛₜᵣ des Erntegutmassenstroms 5 wirkt als Strahlstoß auf die Innenwand des Auswurfkrümmers 8. Der hierbei auftretende mechanische Impuls *I* ist allgemein definiert als Produkt aus Masse *m* und Geschwindigkeit *v* entsprechend *I* = *m* ·*v*.

Das Anheben des Auswurfkrümmers 8 aus der Transport- in die Arbeitsposition zur Förderung des Erntegutmassenstromes 5 auf ein Transportfahrzeug erfolgt vorzugsweise mittels eines doppeltwirkenden hydraulischen Hubzylinders 7. Der Hubzylinder 7 wird zur erfindungsgemäßen Messung des Erntegutmassenstromes 5 nicht bis zur maximalen Höhe gegen den Endanschlag des Hubzylinders 7 gefahren, sondern in eine niedrigere Position, in der der masse- und geschwindigkeitsproportionale Strömungsimpuls *I*ₛₜᵣ des Erntegutmassenstroms 5 mittelbar auf die jeweilige Hydraulikflüssigkeitssäule an Kolbenoberseite und Kolbenboden wirkt und eine masse- und geschwindigkeitsproportionale Änderung des Drucks der Hydraulikflüssigkeit bewirkt. In bevorzugter Ausgestaltung der Erfindung wird der aktuelle Druck der Hydraulikflüssigkeit erfindungsgemäß mittels Drucksensoren 10 mit hoher Abtastrate erfasst und in proportionale Signalwerte 11 umgesetzt.

Weitere Möglichkeiten der Gestaltung der Erfindung beruhen auf einer Kraftmessung an der Anlenkung dieses Hubzylinders 7 z.B. über Kraftmessbolzen (nicht dargestellt).

Die Signalwerte der Sensoren 10 werden in einer Rechnereinheit 12 in einem Mikroprozessor mittels geeigneter digitaler Signalverarbeitung gefiltert und verarbeitet.

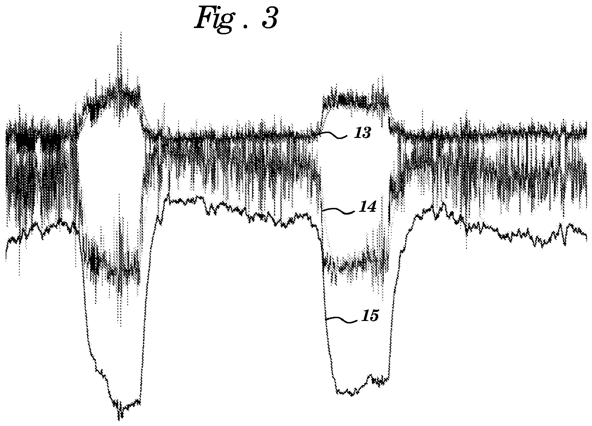

Die Fig. 3 zeigt einen exemplarischen, realen Messschrieb der beiden Druckmesswerte 13, 14 von der Hydrauliksäule der Kolbenoberseite ("Stangenseite") (Fig. 3 (14)) des Hubzylinders sowie dessen Kolbenunterseite ("Kolbenbodenseite") (Fig. 3 (13)) bei der Maisernte mit einem Feldhäcksler.

Der Messschrieb - dargestellt in Fig. 3 - beginnt mit vorhandenem Erntegutmassenstrom 5 und zeigt dann den Verlauf der Messwerte bei Leerfahrt ohne Erntegutmassenstrom bei einem Wendemanöver (Drehen im Vorgewende), wieder einsetzendem Erntegutmassenstrom 5 sowie Wendemanöver. Die durch Schwingungen, Stöße, Vibration sowie den pulsenden Erntegutmassenstrom verrauschten Druckmesswerte 13, 14 werden deutlich. Die Druckmesswerte 13, 14 werden in der weiteren Verarbeitung über einen digitalen Tiefpassfilter geglättet. Der eigentliche erntegutmassenstromproportionale Ergebniswert 15 wird vorzugsweise nach Tiefpassfilterung, Offsetkompensation und Gewichtung der Druckmesswerte 13,14 anhand des Flächenverhältnisses von Kolbenober- und Kolbenunterseite des Hubzylinders 7 durch Addition berechnet.

Die Berechnung des Erntegutmassenstrom 5 erfolgt anhand eines Kalibrierfaktors oder einer in der Rechnereinheit 12 hinterlegten Regressionsfunktion oder anhand von Kennfeldern für den momentanen Istwert aus dem Ergebniswert 15 sowie integrierend über eine einstellbare Zeit und/oder beerntete Fläche, dann für den Ertrag. Die Regressionskurven oder Kennfelder werden über Verwiegen des Erntegutes vorab als allgemein gültige Grundkalibrierung oder jeweils maschinentypspezifisch ermittelt. Eine Feinkalibrierung im Betrieb kann von Zeit zu Zeit erfolgen, indem der berechnete Erntegutmassenstrom 5 anhand der über Gegenwiegen ermittelten tatsächlichen Masse kalibriert/justiert wird.

Der berechnete Erntegutmassenstrom 5 kann zur Kartierung und teilflächenspezifischen Zuordnung für Precision Farming mittels eines Ortungssystems wie z.B. einem GNSS (global navigation satellite system) georeferenziert verortet und somit teilflächenspezifisch zugeordnet werden.

Um den Auswurfkrümmer in der angefahrenen Position zu arretieren, können auf Druck- und / oder Gegendruckseite sperrende Lasthalteventile eingesetzt werden. Da das Lasthalteventil die Hydraulikflüssigkeitssäule sperrt, sind dann die erfindungsgemäßen Abgriffe zur Druckmessung in der Rückverfolgung von Kolbenoberseite und Kolbenunterseite zwischen dem Hydraulikzylinder und dem Lasthalteventil zu schaffen.

Änderungen der durch den Strömungsimpuls *I*ₛₜᵣ bewirkten Kraft können im erfindungsgemäß gegebenen Fall des Gutstroms durch den Auswurfkrümmer auftreten durch Änderungen: a) der Geschwindigkeit des Gutstroms; b) der Masse des Gutstroms; c) der Beschleunigung des Auswurfkrümmers 8 durch Schwingung, Stöße und Vibration; d) der Reibung zwischen Gutstrom und Innenwand des Auswurfkrümmers (Schubspannungsansatz); e) der Längs- und Querneigung des Feldhäckslers; f) des Anstellwinkels des Auswurfkrümmers.

Die Geschwindigkeit des Erntegutmassenstroms 5 kann in der einfachsten Ausführungsform der Erfindung mit guter Genauigkeit aufgrund der konstanten Drehfrequenz der Beschleunigertrommel 3 konstant gesetzt werden. In einer erweiterten Ausführungsvariante mit höherer Genauigkeit kann die Gutstromgeschwindigkeit direkt mit bekannten messtechnischen Vorrichtungen, z.B. Dopplerradarsensor, optischem Flusssensor, optischem Korrelationssensor, etc. oder indirekt mittels einer Drehfrequenzmessung an der Beschleunigertrommel 3 mit an sich bekannten Mitteln, wie Induktivgeber, Hallgeber, Drehencoder etc., erfasst werden.

Die veränderliche Masse des Erntegutmassenstroms 5 ist erfindungsgemäß die Zielgröße des Verfahrens.

Durch Schwingung, Stöße und Vibration erfährt der Auswurfkrümmer 8 samt beinhaltetem Erntegut im Betrieb hochdynamische Beschleunigungen hauptsächlich in vertikaler Richtung. Diese sind in Fig. 3 - Ausschnitt eines Messschriebs - an dem dargestellten Verlauf des Hydraulikdrucks in der Rückführung der Kolbenunterseite und der Rückführung der Kolbenoberseite als erhebliches Rauschsignal zu erkennen. Die erfindungsgemäß bevorzugte Ausgestaltung der Messung auf Druck- und Gegendruckseite des Hubzylinders 7 erweist sich hier als besonders vorteilhaft, da sich die beschleunigungsproportionalen Druckschwankungen auf Druck- und Gegendruckseite (Kolbenoberseite und Kolbenboden) gegenseitig verrechnen und so tilgen lassen.

Des Weiteren liegt erfindungsgemäß ein verstärkender Effekt bei veränderlichem Erntegutmassestrom 5 vor. Bei höherem Erntegutmassestrom 5 erfolgt eine Druckerhöhung an der Kolbenoberseite bei gleichzeitiger Druckverringerung an der Kolbenunterseite. Bei niedrigerem Massestrom erfolgt umgekehrt eine Druckverringerung an der Kolbenoberseite bei gleichzeitiger Druckerhöhung an der Kolbenunterseite.

Die veränderliche Reibung an der Innenwand des Auswurfkrümmers 8, z.B. aufgrund von Anbackungen und veränderlichen Eigenschaften des Erntegutes (bspw. Häckselgröße und Trockenmassegehalt), kann die Messgenauigkeit der erfindungsgemäßen Massebestimmung des Erntegutes beeinträchtigen. Der durch veränderliche Reibung des Erntegutmassenstromes 5 an der Innenwand des Auswurfkrümmers 8 hervorgerufene Messfehler kann durch eine Feinkalibrierung durch Gegenwiegen der Transportfahrzeuge verringert werden.

Der durch unterschiedliche Leermasse des Auswurfkrümmers 8 aufgrund anhaftenden Materials hervorgerufene Messfehler kann durch eine von Zeit zu Zeit durchgeführte Leerkalibrierung ("Null - Tara") in der Fahrt ohne Erntegutdurchsatz verringert werden.

Der Einfluss der aufgrund der gegebenen Geländeform veränderlichen Längs- und Querneigung des Feldhäckslers wird in der einfachsten Ausführungsform der Erfindung vernachlässigt. In einer erweiterten Ausführungsform mit höherer Genauigkeit kann die Neigung des Feldhäckslers in Längs- und Querrichtung mit aus dem Stand der Technik bekannten Mitteln, z.B. Neigungssensoren, erfasst werden. Anhand von neigungswinkelabhängigen Kennfeldern erfolgt die Kompensation des durch die Neigung hervorgerufenen Fehlers softwareseitig in einer Rechnereinheit.

Der erfindungsgemäß einzuhaltende Anstellwinkel des Auswurfkrümmers 8 zum Feldhäcksler 1 bzw. dessen Hubhöhe, d.h. Arbeitsposition, wird in der einfachsten Ausführungsform des Verfahrens vorgegeben und konstant gehalten. Eine Überwachung einer bestimmten einzuhaltenden Hubhöhe (Arbeitsposition) ist mit bekannten, einfachen messtechnischen Mitteln, z.B. mittels Magnet und Magnetgeber, Induktiv- oder Hallgeber, möglich. In einer erweiterten Ausführungsform kann die tatsächliche Hubhöhe des hydraulischen Hubzylinders 7 und somit der Anstellwinkel des Auswurfkrümmers 8 mit aus dem Stand der Technik bekannten Sensoren, wie z.B. einem Lineargeber erfasst werden. Anhand eines hubhöhenabhängigen Kennfeldes kann die Kompensation des durch den veränderlichen Anstellwinkels des Auswurfkrümmers hervorgerufenen Fehlers softwareseitig in der Rechnereinheit erfolgen.

Der Erntegutmassestrom 5 wird am Ende des Auswurfkrümmers 8 vorzugsweise mittels einer verstellbaren Prallplatte auf ein Transportfahrzeug geleitet. In Abhängigkeit vom Anstellwinkel dieser Prallplatte zum Auswurfkrümmer wirken auf diesen veränderliche Kräfte, die die Genauigkeit der erfindungsgemäßen Messung beeinflussen. In einer erweiterten Ausführung der Erfindung wird daher der Anstellwinkel dieser Prallplatte mit bekannten Mitteln, wie z.B. einem Lineargeber, erfasst und zur Kompensation dieses Messfehlers mittels eines Korrekturkennfeldes verrechnet.

Die Beeinflussung der Messgenauigkeit durch veränderliche Viskosität der Hydraulikflüssigkeit aufgrund veränderlicher Temperatur wird erfindungsgemäß weitgehend ausgeglichen durch die Messung des Drucks der Hydraulikflüssigkeitssäule in der Rückverfolgung der Kolbenboden- und Kolbenoberseite.

Der Erntegutmassenstrom wird entlang des parabolischen Innenprofils des Auswurfkrümmers geführt und bewirkt so einen integrierenden Stossimpuls über die gesamte Länge des Innenprofils. Die erfindungsgemäße Ausführung der Messvorrichtung ist besonders vorteilhaft, da diese eine geglättete Erfassung der integrierten Kraft proportional zum Erntegutmassenstrom gewährleistet.

### Liste der Bezugsziffern

- 1: Feldhäcksler
- 2: Fahrerkabine
- 3: Beschleunigertrommel
- 4: Auswurfturm
- 5: Erntegutmassenstrom
- 6: Motor
- 7: Einrichtung zur Einstellung des Neigungswinkels / Hubzylinder
- 8: Auswurfkrümmer
- 9: kippbare Leitplatte
- 10: Drucksensoren
- 11: proportionale Signalwerte
- 12: Rechnereinheit
- 13: Druckmesswert an der Kolbenunterseite
- 14: Druckmesswert an der Kolbenoberseite
- 15: Ergebniswert

## Patentansprüche

1. Verfahren zur Messung des Erntegutmassestroms (5) an einem Feldhäcksler (1), bei dem mittels einer Erntegutaufnahmevorrichtung das Erntegut aufgenommen und über Einzugsaggregate zu Aggregaten zur Zerkleinerung und Förderung zugeführt wird, wobei das Erntegut über einen an einem Auswurfturm (4) vorgesehenen Auswurfkrümmer (8) zu einem Transportfahrzeug gefördert wird und zur Lenkung des Erntegutmassestroms (5) auf das Transportfahrzeug eine Einrichtung (7) zur Einstellung des Neigungswinkels des Auswurfkrümmers (8) vorgesehen ist,
**gekennzeichnet durch**
die Ermittlung der der Masse des Erntegutmassestroms (5) proportionalen Kraft, die an der Einrichtung (7) zur Einstellung des Neigungswinkels des Auswurfkrümmers (8) wirkt.

2. Verfahren nach Anspruch 1,
**dadurch gekennzeichnet, dass**
die Einstellung des Neigungswinkels des Auswurfkrümmers mittels mindestens eines hydraulischen Hubzylinders (7) erfolgt und die Messung der Drücke der Hydraulikflüssigkeit am mindestens einen Hubzylinder mittels Drucksensoren (10) erfolgt.

3. Verfahren nach Anspruch 2,
**dadurch gekennzeichnet, dass**
die Messung auf Druck- und Gegendruckseite des mindestens einen Hubzylinders (7) erfolgt.

4. Verfahren nach den Ansprüchen 2 und 3,
**dadurch gekennzeichnet, dass**
die Drucksensoren (10) den Druck der Hydraulikflüssigkeit in der Rückverfolgung der jeweiligen Hydraulikleitung von Kolbenboden- und Kolbenoberseite erfassen.

5. Verfahren nach Anspruch 1,
**dadurch gekennzeichnet, dass**
die Einstellung des Neigungswinkels des Auswurfkrümmers (8) mittels mindestens eines hydraulischen Hubzylinders (7) erfolgt und die Messung der der Masse des Erntegutmassestroms (5) proportionalen Kraft an der Anlenkung des mindestens einen Hubzylinders (7) mittels Kraftsensoren erfolgt.

6. Verfahren nach den Ansprüchen 2 bis 5,
**dadurch gekennzeichnet, dass**
die durch die Druck- (10) und/oder Kraftsensoren ermittelten Werte (13,14) in proportionale Signalwerte umgesetzt werden.

7. Verfahren nach den Ansprüchen 2 bis 6,
**dadurch gekennzeichnet, dass**
ein erntegutmassenstromproportionaler Ergebniswert (15) nach Tiefpassfilterung, Offsetkompensation und Gewichtung der Messwerte (13,14) anhand des Flächenverhältnisses von Kolbenober- und -unterseite des Hubzylinders (7) durch Addition berechnet wird.

8. Verfahren nach einem der vorangegangenen Ansprüche,
**dadurch gekennzeichnet, dass**
die Berechnung des Erntegutmassestroms (5) anhand eines Kalibrierfaktors oder einer in einer Rechnereinheit (12) hinterlegten Regressionsfunktion oder anhand von Kennfeldern für den momentanen Istwert aus dem Ergebniswert (15) sowie integrierend über eine einstellbare Zeit und/oder beerntete Fläche berechnet und dann für den Ertrag berechnet werden.

9. Verfahren nach Anspruch 8,
**dadurch gekennzeichnet, dass**
die Regressionskurven oder Kennfelder über Verwiegen des Erntegutes vorab als Grundkalibrierung jeweils maschinentypspezifisch ermittelt werden.

10. Verfahren nach einem der vorangegangenen Ansprüche,
**dadurch gekennzeichnet, dass**
die Neigung des Feldhäckslers (1) in Längs- und/oder Querrichtung mittels Sensoren erfasst wird, wobei anhand von neigungswinkelabhängigen Kennfeldern eine softwareseitige Kompensation des durch die Neigung hervorgerufenen Fehlers erfolgt.

11. Verfahren nach einem der vorangegangenen Ansprüche,
**dadurch gekennzeichnet, dass**
der Anstellwinkel einer an dem Auswurfkrümmer (8) vorgesehenen Prallplatte erfasst und zur Kompensation der aufgrund der durch den Anstellwinkel dieser Prallplatte zum Auswurfkrümmer (8) veränderlichen Kräfte hervorgerufenen Messfehler mittels eines Korrekturkennfeldes verrechnet werden.

12. Verfahren nach einem der vorangegangenen Ansprüche,
**dadurch gekennzeichnet, dass**
die Beeinflussung der Messgenauigkeit durch veränderliche Viskosität der Hydraulikflüssigkeit aufgrund veränderlicher Temperatur weitgehend durch die Messung des Drucks der Hydraulikflüssigkeitssäule in der Rückverfolgung der Kolbenboden- und Kolbenoberseite ausgeglichen wird.

13. Verfahren nach einem der vorangegangenen Ansprüche,
**dadurch gekennzeichnet, dass**
der berechnete Erntegutmassenstrom (5) zur Kartierung und teilflächenspezifischen Zuordnung für Precision Farming mittels eines Ortungssystems georeferenziert verortet und teilflächenspezifisch zugeordnet wird.

14. Vorrichtung zur Durchführung des Verfahrens nach einem der vorangegangenen Ansprüche, bei dem Sensoren (10) zur Messung der der Masse des Erntegutmassestroms (5) proportionalen Kraft vorgesehen sind, die an der Einrichtung (7) zur Einstellung des Neigungswinkels des Auswurfkrümmers (8) wirkt.
**dadurch gekennzeichnet, dass**
zur Arretierung des Auswurfkrümmers (8) in der angefahrenen Position Druck- und/oder Gegendruckseite sperrende Lasthalteventile vorgesehen sind.

## Claims

1. Procedure for measuring the crop mass flow (5) on a forage harvester (1), whereby the crop is received by means of crop acceptance assembly with an acceptance aggregate and transported through a discharge chute (8) mounted on a discharge tower (4) to a transport vehicle, with a device (7) for adjusting the tilt angle of the discharge chute (8) to control the discharge,
**characterized in that**
the crop mass flow (5) is determined through the proportional force exerted on the device (7) to adjust the tilt angle of the discharge chute (8).

2. Procedure according to Claim 1,
**characterized in that**
the tilt angle of the discharge chute is adjusted by means of a hydraulic lift cylinder (7) and the pressure of the hydraulic liquid of at least one lift cylinder is measured by means of pressure sensors (10).

3. Procedure according to Claim 2,
**characterized in that**
the measurement is made on both the pressure and the counter-pressure side of at least the one lift cylinder (7).

4. Procedure according to Claims 2 and 3,
**characterized in that**
the pressure sensors (10) record the pressure of the hydraulic liquid in the reverse tracking of the respective hydraulic line from the piston bottom to top.

5. Procedure according to Claim 1,
**characterized in that**
the tilt angle of the discharge chute (8) is adjusted by at least one hydraulic lift cylinder (7), and that the proportional force of the volume of the crop mass flow (5) is measured by force sensors to control of the at least one lift cylinder (7).

6. Procedure according to Claims 2 through 5,
**characterized in that**
the values (13, 14) recorded by pressure (10) and/or force sensors are converted to proportional signal values.

7. Procedure according to Claims 2 through 6,
**characterized in that**
an end result value (15) is calculated by addition of the area ratio of piston top and bottom of the lift cylinder (7) after low pass filtering, offset compensation and weighting of the measured values (13, 14).

8. Procedure according one of the preceding Claims,
**characterized in that**
a calibration factor or a regression function saved in the computing unit (12), or value reference fields for the current status from the result value (15) are used for the calculation of the crop mass flow (5), with integration of an adjustable time frame and/or harvested area, and for the final calculation of the crop result.

9. Procedure according to Claim 8,
**characterized in that**
the regression curves or value reference fields are determined as a basic calibration for each machine type by weighing the crop.

10. Procedure according one of the preceding Claims,
**characterized in that**
the tilt angle of the forage harvester (1) is recorded by sensors inn the longitudinal and /or across orientation, whereby tilt angle dependent value reference fields are compensated through software measures to correct errors resulting from the tilt angle.

11. Procedure according one of the preceding Claims,
**characterized in that**
the tilt angle of an impeller plate provided on the discharge chute (8) is recorded and included in the calculation for the compensation of the changeable forces resulting in measurement errors by means of a value reference field.

12. Procedure according one of the preceding Claims,
**characterized in that**
the influence of the variable viscosity of the hydraulic liquid on the measurement precision due to changing temperatures, can be compensated by the measurement of the pressure of the hydraulic liquid column in the reverse tracking from the piston bottom to the top.

13. Procedure according to one of the preceding Claims,
**characterized in that**
the calculated crop mass flow (5) is associated by means of a geo-referencing localization system for precision farming, mapping, and specifically to partial areas.

14. Device for the execution of a procedure according to the aforementioned Claims, whereby sensors (10) are provided for the measurement of the volume of the crop mass flow (5) through a proportional force exerted on a device (7) for the purpose of adjusting the tilt angle of the discharge chute (8), **characterized in that**
blocking discharge valves are provided for locking the discharge chute (8) in the attained positions of pressure and/or counter-pressure.

## Revendications

1. Procédé de mesure du débit massique de la récolte (5) sur une ensileuse (1), dans laquelle le produit de la récolte est absorbé au moyen d'un dispositif de réception de la récolte et acheminé vers des agrégats au moyen d'unités d'alimentation par l'intermédiaire d'une goulotte d'éjection (8) prévue sur une tour d'éjection (4) et dans laquelle un dispositif (7) de réglage de l'angle d'inclinaison de la goulotte d'éjection (8) est prévu pour guider le débit massique de récolte (5) sur le véhicule de transport,
**caractérisé par**
la détermination de la force proportionnelle à la masse du débit massique de la récolte (5), agissant sur le dispositif (7) de réglage de l'angle d'inclinaison de la goulotte d'éjection (8).

2. Procédé selon la revendication 1,
**caractérisé par le fait que**
l'angle d'inclinaison de la goulotte d'éjection est ajusté par au moins un cylindre de levage hydraulique (7) et les pressions du fluide hydraulique sont mesurées sur au moins un cylindre de levage à l'aide de capteurs de pression (10).

3. Procédé selon la revendication 2,
**caractérisé par le fait que**
la mesure est effectuée sur le côté pression et contre-pression d'au moins un cylindre de levage (7).

4. Procédé selon les revendications 2 et 3,
**caractérisé par le fait que**
les capteurs de pression (10) détectent la pression du fluide hydraulique dans le système de traçabilité de la ligne hydraulique respective sur le côté inférieur et supérieur du piston.

5. Procédé selon la revendication 1,
**Caractérisé par le fait que**
le réglage de l'angle d'inclinaison de la courbure d'éjection (8) est effectué par au moins un cylindre de levage hydraulique (7) et la mesure de la force proportionnelle à la masse du débit massique de la récolte (5) a lieu au niveau de l'articulation d'au moins un cylindre de levage (7) au moyen de capteurs de force,

6. Procédé selon les revendications 2 à 5,
**caractérisé par le fait que**
les valeurs (13,14) déterminées par la pression (10) et/ou les capteurs de force sont converties en valeurs de signal proportionnelles.

7. Procédé selon les revendications 2 à 6,
**caractérisé par le fait**
**qu'**une valeur de résultat proportionnelle au débit massique de la récolte (15) est calculée par addition après filtrage passe-bas, compensation de décalage et pondération des valeurs mesurées (13,14) sur la base du rapport de surface entre le haut et le bas du piston du cylindre de levage (7).

8. Procédé selon l'une des revendications précédentes,
**caractérisé par le fait que**
la mesure du débit massique de la récolte (5) est calculée sur la base d'un facteur d'étalonnage ou d'une fonction de régression stockée dans une unité informatique (12) ou sur la base de champs principaux pour la valeur réelle actuelle à partir de la valeur de résultat (15) et est intégrée sur une période et / ou une surface récoltée ajustable, puis calculée pour le rendement.

9. Procédé selon la revendication 8,
**caractérisé par le fait que**
les courbes de régression ou les champs clés sont déterminés en pesant la récolte à l'avance comme un étalonnage de base de chaque type de machine de manière spécifique.

10. Procédé selon l'une des revendications précédentes,
**caractérisé par le fait que**
l'inclinaison de l'ensileuse (1) est détectée dans le sens longitudinal et / ou transversal au moyen de capteurs, par lesquels une compensation côté logiciel de l'erreur causée par l'inclinaison est effectuée par inclinaison.

11. Procédé selon l'une des revendications précédentes,
**caractérisé par le fait que**
l'angle de réglage d'un déflecteur placé sur la goulotte d'éjection (8) est saisi et utilisé pour compenser les erreurs issues des forces variables par l'incidence de l'angle d'attaque de ce déflecteur par rapport à la goulotte d'éjection au moyen d'une carte de correction.

12. Procédé selon l'une des revendications précédentes,
**caractérisé par le fait que**
l'influence de la précision de mesure par la viscosité variable du fluide hydraulique due à la température variable est largement compensée par la mesure de la pression de la colonne de fluide hydraulique dans le système de traçabilité du côté inférieur et supérieur du piston.

13. Procédé selon l'une des revendications précédentes,
**caractérisé par le fait que**
le débit massique de récolte calculé (5) pour la cartographie et l'affectation spécifique à une zone pour une agriculture de précision peut être géoréférencé au moyen d'un système de localisation et affecté à une zone spécifique.

14. Dispositif pour l'exécution du procédé selon l'une des revendications précédentes, dans lequel des capteurs (10) sont prévus pour mesurer la force proportionnelle du débit massique de la récolte (5) utilisée sur l'installation (7) afin d'ajuster l'angle d'inclinaison de la goulotte d'éjection (8),
**caractérisé par** le fait
de désinsérer la goulotte d'éjection (8) dans la position de pression desservie. Des vannes de levage latérales et/ou à contre-pression sont fournies.
